# EUROPÄISCHE PATENTSCHRIFT

(11) **EP 3 768 491 B1**
(45) Veröffentlichungstag und Bekanntmachung des Hinweises auf die Patenterteilung: **12.01.2022**
(21) Anmeldenummer: 19713711.0
(22) Anmeldetag: 07.03.2019
(51) Int. Cl.: B29C 49/42, B29C 49/04, B29L 23/18, B29K 23/00, B29K 27/06, B29C 69/00, B29C 49/22, B29C 55/24, B29C 49/02, B29L 9/00, B29C 49/00

(54) **VERFAHREN UND ANLAGE ZUM HERSTELLEN EINES EINWANDIGEN ODER MEHRWANDIGEN ROHRKÖRPERS AUS THERMOPLASTISCHEM KUNSTSTOFF**
METHOD AND MACHINE FOR PRODUCING A SINGLE-WALLED OR MULTI-WALLED TUBULAR THERMOPLASTIC BODY
PROCÉDÉ ET INSTALLATION DESTINÉS À FABRIQUER UN CORPS TUBULAIRE À UNE OU PLUSIEURS PAROIS À PARTIR DE PLASTIQUE THERMOPLASTIQUE

(30) Priorität: 19.03.2018 DE 102018106319
(43) Veröffentlichungstag der Anmeldung: 27.01.2021
(73) Patentinhaber: Richter, Bodo, 53604 Bad Honnef (DE)
(72) Erfinder: RICHTER, Günter, 57610 Altenkirchen (DE)
(74) Vertreter: Schaumburg und Partner Patentanwälte mbB
(86) Internationale Anmeldenummer: PCT/EP2019/055673
(87) Internationale Veröffentlichungsnummer: WO 2019/179778

(56) Entgegenhaltungen:
- CN-A- 104 385 610
- JP-A- H0 664 025
- JP-A- S5 718 219

## Beschreibung

Die Erfindung betrifft ein Verfahren zum Herstellen eines einwandigen oder mehrwandigen Rohrkörpers aus thermoplastischem Kunststoff. Weiterhin betrifft die Erfindung eine Anlage zum Herstellen solcher Rohrkörper.

Groß dimensionierte Formteile, wie beispielsweise Rohrsegmente, werden im Stand der Technik auf Rohrextrusionsanlagen oder nach dem Extrusions-Wickelverfahren hergestellt. Die zugehörigen Anlagen sind bei Rohrdurchmessern > 1500 mm extrem aufwendig und teuer. Rohrsegmente oder Rohrkörper werden unter anderem zur Herstellung von Lagertanks benötigt. Entsprechend dem gewünschten Tankvolumen werden die Rohrkörper in unterschiedlichen Längen hergestellt und miteinander verschweißt. Zur Erhöhung der Ringsteifigkeit werden vorzugsweise einwandige oder doppelwandige Wellrohrkörper verwendet. Insbesondere benötigt die Wirtschaft doppelwandige Wellrohrkörper mit einer glatten Innenwand, denn diese Wellrohrkörper haben gegenüber einwandigen Wellrohrkörpern den Vorteil der leichteren Reinigung und Entleerung.

Im Stand der Technik ist außerdem die Herstellung großer Rohrsegmente auf Blasformanlagen bekannt. Auf einer solchen Anlage lassen sich geschlossene Hohlkörper mit einem Durchmesser von 2000 mm und größer herstellen. Nachteilig hierbei ist, dass ein derartig hergestellter Hohlkörper nur rundum geschlossen gefertigt werden kann, was bedeutet, dass zur Herstellung von Rohrsegmenten am Hohlkörper die beiden Böden oben und unten abgetrennt werden müssen und somit Abfall sind. Dieser Abfall kann 40 % und mehr des eigentlichen Hohlkörpers betragen. Hinzu kommt noch der sogenannte Butzenanteil, der zwangsläufig beim Blasformprozess anfällt, was insgesamt zu einem Abfall von 50 % und mehr führt. Hat z.B. ein nach dem Blasformverfahren hergestellter Rohrkörper ein gewünschtes Gewicht von 50 kg Kunststoff, so muss das Schussgewicht, d.h. das zu extrudierende Kunststoffmaterial, mehr als 100 kg betragen, was in einem hohen Maße unwirtschaftlich ist. Ein weiterer Nachteil ist auch die begrenzte Länge des in einer Blasformanlage gefertigen Rohrkörpers aufgrund maschineller Gegebenheiten. Hinzu kommt, dass im Blasformverfahren der hergestellte Rohrkörper nur einwandig produziert werden kann.

JP S57 18219 A betrifft ein Verfahren zum Herstellen eines mehrwandigen Rohrkörpers unter Verwendung von thermoplastischem Kunststoff. Ein Vorformling wird mit Hilfe eines in seinem Inneren angeordneten Spreizkerns durch Spreizelemente in Querrichtung gespreizt, so dass eine glatte Rohrwand entsteht. Zur Verbesserung der mechanischen Steifigkeit wird die Wand des Rohrkörpers mit einer Aluminiumschicht versehen.

JP H06 64025 A betrifft ein Blasformverfahren, bei dem ein Vorformling in einer Blasform gegen deren glatte Innenfläche durch Druckluft gedrückt wird. Eine Spreizvorrichtung im Inneren des Vorformlings wird mit einer vorbestimmten Geschwindigkeit bewegt, um ein definiertes Dickenverhältnis (specified thickness ratio) in Umfangsrichtung bei einer konstanten Dicke der Wandung in vertikaler Richtung zu erzielen. Im Fehlerfall ergeben sich unerwünschte wellenförmige Abschnitte. Die Spreizvorrichtung oder die Blasform weisen jeweils kein Wellenprofil oder Napfprofil auf.

CN104385610 A betrifft die Herstellung von Brennstoffbehältern ausgehend von vier flachen extrudierten Vorformlingen, wobei eine versteifende Napfprofil eingepresst wird.

Es ist Aufgabe der Erfindung, ein Verfahren und eine Anlage zum Herstellen eines Rohrkörpers aus thermoplastischem Kunststoff anzugeben, mit dem bzw. mit der großvolumige Rohrkörper wirtschaftlich und mit geringem Kunststoffabfall hergestellt werden können.

Diese Aufgabe wird gelöst durch ein Verfahren und eine Vorrichtung nach den unabhängigen Ansprüchen.

Bei der Erfindung umgibt nach dem Extrudieren der vorzugsweise zylinderförmige Vorformling den Spreizkern und er wird entsprechend der gewünschten Länge nahe dem Düsenkopf abgetrennt. Die Extrusionsvorrichtung kann beispielsweise so aufgebaut sein wie bei einer herkömmlichen Blasformanlage für Hohlkörper mit einem großen Durchmesser. Der Spreizkern dehnt den Vorformling in seinem noch warmen Zustand auf den gewünschten Durchmesser. Bei einem einwandigen Rohrkörper erfolgt in diesem gedehnten Zustand das Abkühlen, wonach der Spreizkern in den nicht gespreizten Zustand verfahren wird. Zur Herstellung eines zweiwandigen Rohrkörpers wird nach dem Spreizen des ersten Vorformlings der Spreizkern in den nicht gespreizten Zustand verfahren und dann ein zweiter Vorformling extrudiert. Der Spreizkern wird dann erneut gespreizt, so dass der zweite Vorformling in Kontakt mit dem noch warmen ersten Vorformling tritt und mit diesem verschweisst. Sodann werden beide Vorformlinge abgekühlt und der fertige Rohrkörper der Anlage entnommen.

Beim genannten Verfahren wird nahezu das vollständige extrudierte Kuntstoffmaterial genutzt und es entsteht kein Kunststoffabfall. Das Verfahren arbeitet vergleichsweise schnell und hat somit eine hohe Wirtschaftlichkeit, insbesondere unter Berücksichtigung des verringerten Abfalls. Außerdem besitzt das Verfahren eine hohe Anwendungs-Flexibiltät, denn es können auf einfache Weise Rohrkörper mit unterschiedlichen Längen produziert werden.

Gemäß einem bevorzugten Ausführungsbeispiel umfasst der Spreizkern einen ersten Teilkern und einen zweiten Teilkern und beim Spreizvorgang erfolgt zunächst eine Vorspreizung mittels des ersten Teilkerns, bei der erste Spreizelemente den Innenraum im Vorformling so weit vergrößern, dass Platz in diesem Innenraum für den zweiten Teilkern geschaffen wird, dessen zweite Spreizelemente den Vorformling bis zur vorbestimmten Ausdehnung und Form in Querrichtung spreizen. Demgemäß kann der erste Teilkern eine längliche schlankere Form haben, so dass der schlauchförmige Vorformling, zumeist in Zylinderform, mit einem kleinen Durchmesser extrudiert werden kann. Durch das Vorspreizen des Vorformlings auf einen vergrößerten Durchmesser wird sodann Platz für den zweiten Teilkern geschaffen, dessen Spreizelemente dann den Vorformling bis zur vorbestimmten Ausdehnung und der vorbstimmten Form spreizen.

Das Verfahren kann zur Herstellung eines einwandigen, gewellten Rohrkörpers verwendet werden, wobei mindestens eine zweiteilige Hohlform um den schlauchförmigen Vorformling angeordnet wird. Beim Spreizen durch die Spreizvorrichtung wird der Vorformling gegen ein Wellenprofil der Hohlform gedrückt und durch ein Beaufschlagen der Hohlform mit Vakuum und/oder des Spreizkerns mit Druckluft nimmt der noch warme Vorformling die Form des Wellenprofils an. An Stelle eines Wellenprofils kann auch ein Napfprofil verwendet werden. Der Rohrkörper ist dann mit Näpfen versehen.

Bei einem bevorzugten Verfahren zur Herstellung eines doppelwandigen, wellenförmigen Rohrkörpers wird nach dem Herstellen eines einwandigen wellenförmigen Rohrkörpers zunächst der Spreizkern in den eingefahrenen Zustand bewegt. Danach wird aus dem Düsenkopf ein weiterer schlauchförmiger Vorformling kontinuierlich ausgebracht, so dass dieser dem noch warmen Vorformling in der Hohlform mit Wellenprofil gegenübersteht. Der Spreizkern spreizt dann den weiteren Vorformling und bringt ihn mit dem in der Hohlform befindlichen Vorformling in Kontakt, so dass der weitere Vorformling mit dem in der Hohlform befindlichen Vorformling an Kontaktstellen verschweißt. Danach werden beide Vorformlinge abgekühlt und der Anlage entnommen. Auf diese Weise entsteht ein Rohrkörper mit einer glatten Innenwand und einer wellenförmigen Außenwand. Ein solcher Rohrkörper hat hohe Ringstabilität und kann auf einfache Weise entleert und gereinigt werden. Auch hier kann an Stelle eines Wellenprofils ein Napfprofil verwendet werden. Die Verschweißung erfolgt dann an den Kontaktstellen punktförmig oder napfförmig.

Gemäß einem weiteren Aspekt der Erfindung wird eine Anlage angegeben, die zum Herstellen eines mindestens einwandigen Rohrkörpers aus thermoplastischem Kunststoff dient. Diese Anlage führt zu den im Zusammenhang mit dem Herstellverfahren beschriebenen technischen und wirtschaftlichen Vorteilen.

Ausführungsbeispiele der Erfindung werden nachfolgend anhand der Zeichnung erläutert. Darin zeigt:
- Figur 1: eine Anlage zur Herstellung eines Rohrkörpers aus thermoplastischem Kunststoff in einer Seitenansicht und einer Draufsicht,
- Figur 2: die Anlage nach Figur 1 im Zustand nach dem Spreizvorgang,
- Figur 3: den Betriebszustand nach dem Abkühlen und der darauf folgenden seitlichen Entnahme des Rohrkörpers,
- Figur 4: eine Anlage zur Herstellung eines einwandigen Wellrohrkörpers in Seitenansicht und Draufsicht,
- Figur 5: den Betriebszustand der Anlage mit ausgespreizten rillenförmigen Spreizelementen,
- Figur 6: die Verformung des Vorformlings zu einem Wellrohrprofil und einen Teilausschnitt des Wellrohrprofils,
- Figur 7: den Betriebszustand der Anlage vor der seitlichen Entnahme des wellenförmigen, einwandigen Rohrkörpers,
- Figur 8: eine Anlage zur Herstellung eines einwandigen Wellrohrkörpers unter Verwendung einer Hohlform in einer Seitenansicht und einer Draufsicht,
- Figur 9: den Zustand bei Spreizung, wobei der Vorformling gegen ein Wellrohrprofil der Hohlform gedrückt wird,
- Figur 10: die Verformung des Vorformlings zum Wellrohrkörper unter Vakuumbeaufschlagung der Hohlform und einen vergrößerten Teilausschnitt,
- Figur 11: den Betriebszustand nach Abkühlung des Vorformlings und die Entnahme des einwandigen, wellenförmigen Rohrkörpers,
- Figur 12: schematisch die Herstellung eines doppelwandigen Wellrohrkörpers mit Ausbringung eines ersten Vorformlings,
- Figur 13: die Ausbringung eines zweiten Vorformlings in die geöffnete Hohlform,
- Figur 14: den Betriebszustand nach der Spreizung, wobei erster Vorformling und zweiter Vorformling miteinander verschweißen,
- Figur 15: den Betriebszustand mit geöffneter Hohlform und die Entnahme des zweiwandigen Wellrohrkörpers,
- Figur 16: eine Spreizvorrichtung mit zweiteiligem Spreizkern,
- Figur 17: eine schematische Darstellung in Seitenansicht und Draufsicht mit noch nicht gespreiztem ersten Teilkern,
- Figur 18: eine Darstellung mit gespreiztem ersten Teilkern und ausgefahrenen ersten Spreizelementen,
- Figur 19: den ersten Teilkern und den zweiten Teilkern in der oberen Position und mit ausgefahrenen ersten Spreizelementen und zweiten Spreizelementen, und
- Figur 20: einen dreiwandigen Rohrkörper.

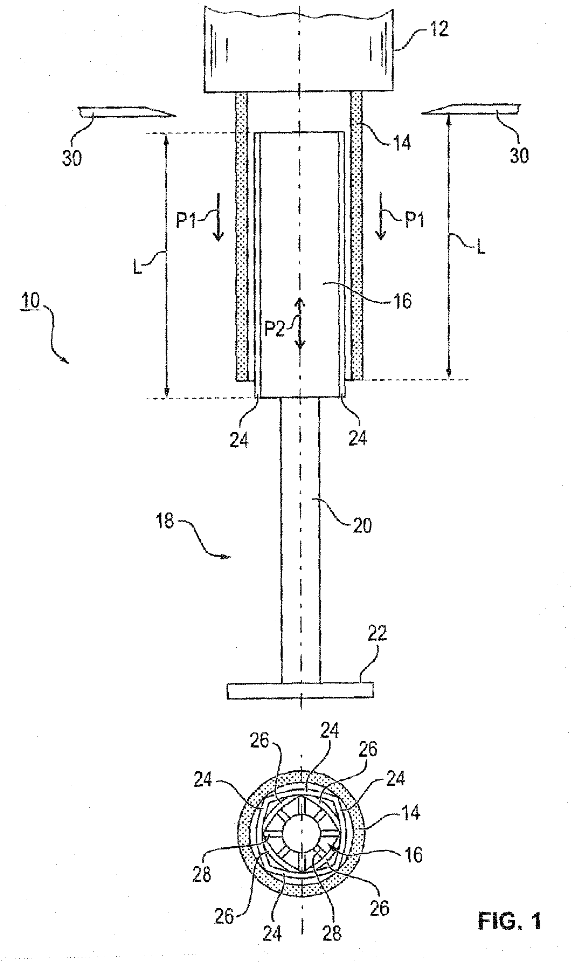

Figur 1 zeigt Teile einer Anlage 10 zur Herstellung eines einwandigen oder mehrwandigen Rohrkörpers aus thermoplastischem Kunststoff, beispielsweise aus PE, PP oder PVC. Aus einem Düsenkopf 12 einer Extrusionsvorrichtung (nicht dargestellt) wird, wie in der Seitenansicht zu sehen ist, ein schlauchförmiger Vorformling 14 über einen zentrisch zum Düsenkopf 12 angeordneten Spreizkern 16 einer insgesamt mit 18 bezeichneten Spreizvorrichtung ausgebracht. Dieser Spreizkern 16 ist in Richtung des Doppelpfeils P2 beweglich auf einem Führungselement 20 angeordnet, welches auf einer Standplatte 22 steht. Zur Auf- bzw. Abbewegung des Spreizkerns 16 dient ein hydraulischer oder elektrischer Antrieb (nicht dargestellt).

Wie der in Figur 1 unten dargestellten Draufsicht zu entnehmen ist, umfasst der Spreizkern 16 mehrere Spreizelemente 24 und 26 (jeweils vier Spreizelemente sind dargestellt). Diese Spreizelemente 24, 26 befinden sich im dargestellten eingefahrenen Zustand. Sie können mittels Antriebe 28 (nur zwei Antriebe sind bezeichnet) ausgefahren werden und dehnen dabei den Vorformling 14. Die Antriebe 28 können z.B. hydraulisch oder elektrisch betätigt sein.

Der Spreizkern 16 kann wie oben erwähnt entlang des Doppelpfeils P2 nach oben und unten gefahren werden, so dass in der unteren Position ein fertiggestellter Rohrkörper seitlich der Anlage 10 entnommen werden kann. Der Spreizkern 16 kann in einer Variante in der dargestellten oberen Position auch fest angeordnet sein und ist dann nicht in Richtung des Doppelpfeils P2 bewegbar. Zur Entnahme des fertigen Rohrkörpers nach oben wird dann der Düsenkopf 12 seitlich wegbewegt. Diese Variante ist in Figur 1 nicht dargestellt.

Kurz bevor der Vorformling 14 bei seiner Bewegung nach unten in Richtung P1 seine erforderliche Länge L hat, die mit der Länge L des Spreizkerns 16 übereinstimmt, trennt eine Trennvorrichtung 30 den Vorformling vom Düsenkopf 12 ab, so dass dieser Vorformling 14 der Länge der Spreizelemente 24, 26 gegenübersteht. Dieser Vorgang kann auch durch Greifelemente (nicht dargestellt) unterstützt werden, welche den Vorformling 14 von außen stützen. Eine unterstützende Wirkung bei diesem Vorgang kann auch durch den Spreizkern 16 selbst erfolgen, indem die Spreizelemente 24, 26 beginnen sich zu spreizen, so dass diese Spreizelemente 24, 26 in Kontakt mit dem Vorformling 14 kommen und dessen Abwärtsbewegung gezielt hemmen.

Die Spreizelemente 24, 26 werden durch die Antriebe 28 auf das gewünschte Außenmaß für den einwandigen fertigen Rohrkörper gespreizt. Danach wird der gespreizte Vorformling 14, der durch die Spreizelemente 24, 26 gehalten ist, abgekühlt. Die Abkühlung des zum Rohrkörper geformten Vorformlings 14 kann unterstützt werden durch Kühlung der Spreizelemente 24, 26 und/oder durch Gebläsekühlung von außen. Weiterhin können die Spreizelemente 24, 26 mit Vakuum beaufschlagt werden, um den Vorformling in engem Kontakt mit der Oberfläche der Spreizelemente 24, 26 zu halten.

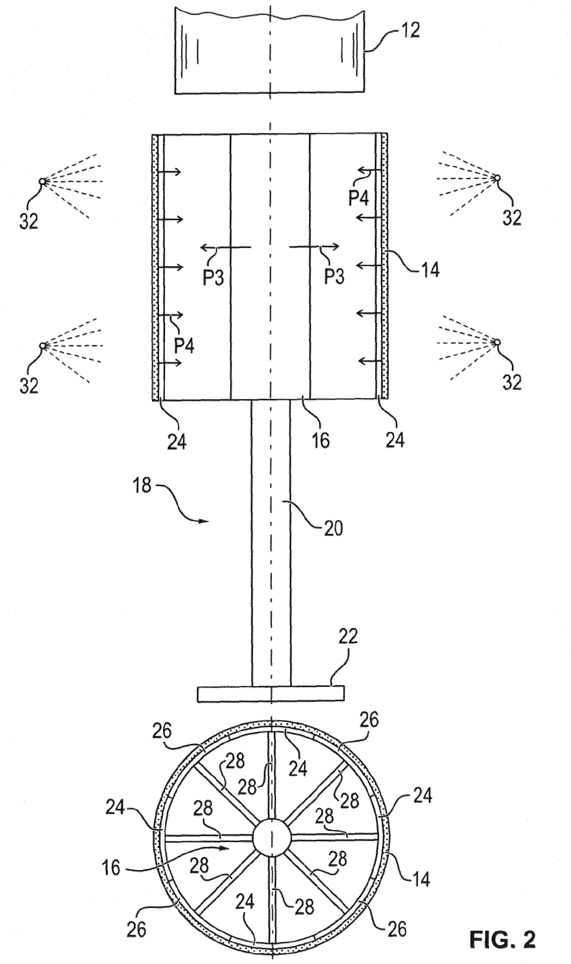

Figur 2 zeigt in einer Seitenansicht und einer Draufsicht den Zustand nach dem Spreizvorgang. Gleiche Teile sind nachfolgend gleich bezeichnet. In der Draufsicht ist zu erkennen, dass die Spreizelemente 24, 26 durch die Antriebe 28 vollständig ausgefahren sind und den Vorformling 14 spreizen, wobei er seine Wanddicke verringert (vgl. hierzu Figur 1). Die Spreizung erfolgt in Richtung der Pfeile P3. Die Pfeile P4 deuten das Vakuum an, mit welchem die Spreizelemente 24 bzw. 26 beaufschlagt sind und den engen Kontakt zum Vorformling 14 bewirken. Auf diese Weise wird die Abkühlgeschwindigkeit erhöht. Eine Kühlung von außen erfolgt mit Hilfe von Gebläsen 32.

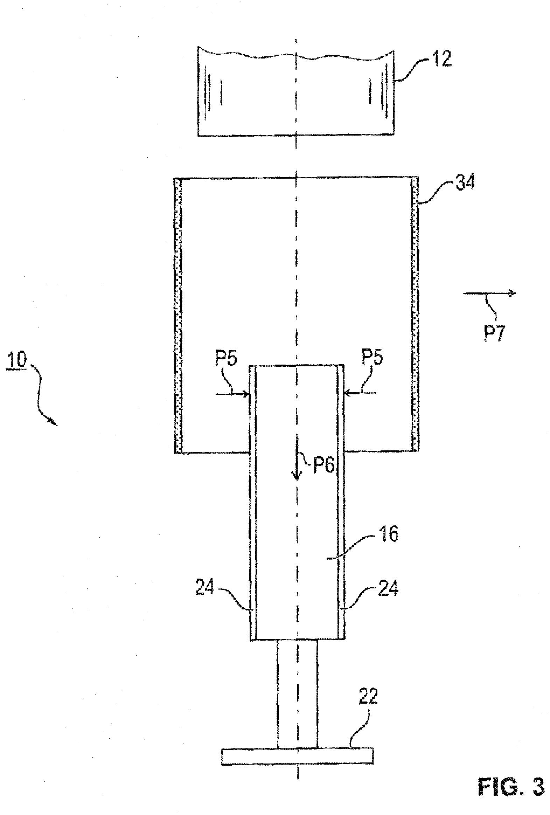

Figur 3 zeigt den Zustand nach dem Abkühlen. Die Spreizelemente 24, 26 des Spreizkerns 16 bewegen sich entlang der Pfeile P5 in den eingefahrenen Zustand und der Spreizkern 16 wird in Richtung des Pfeils P6 nach unten in Richtung der Standplatte 22 gefahren. Der Vorformling 14 kann im abgekühlten Zustand als Rohrkörper 34 seitlich in Richtung des Pfeils P7 der Anlage 10 entnommen werden.

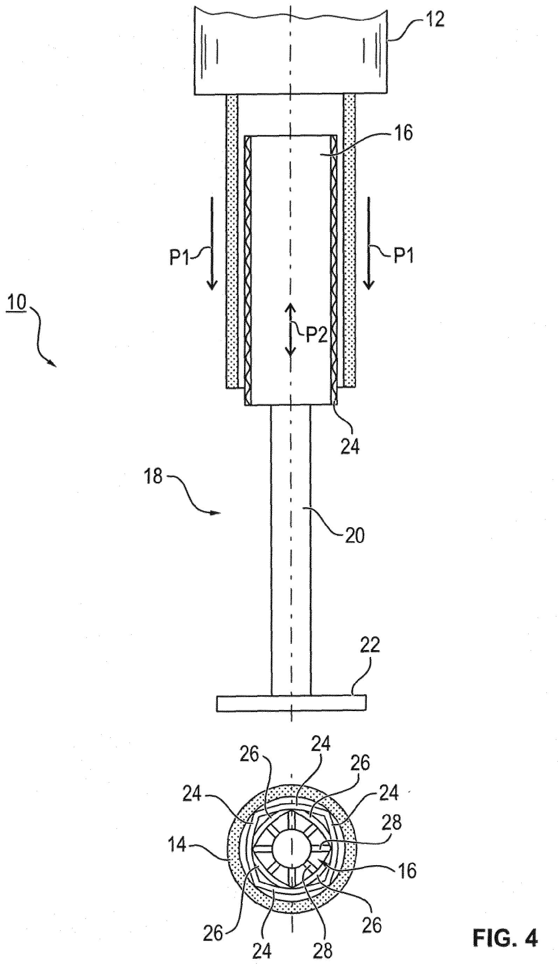

Die Figuren 4 bis 7 beziehen sich auf eine Anlage zur Herstellung eines einwandigen Wellrohrkörpers. Die Wellrohrformung erfolgt über den Spreizkern 16, dessen Spreizelemente 24, 26 nicht glatt wie bei den vorherigen Figuren sondern wellenförmig mit Rillen ausgebildet sind. Der Herstellprozess erfolgt im Wesentlichen wie in den bisherigen Figuren 1 bis 3, jedoch mit dem Unterschied, dass der Vorformling 14 nunmehr über einen nicht gespreizten Spreizkern 16, dessen Spreizelemente 24, 26 ein Wellrohrprofil haben, diskontinuierlich in Richtung des Pfeils P1 ausgebracht wird, wie dies Figur 4 zeigt.

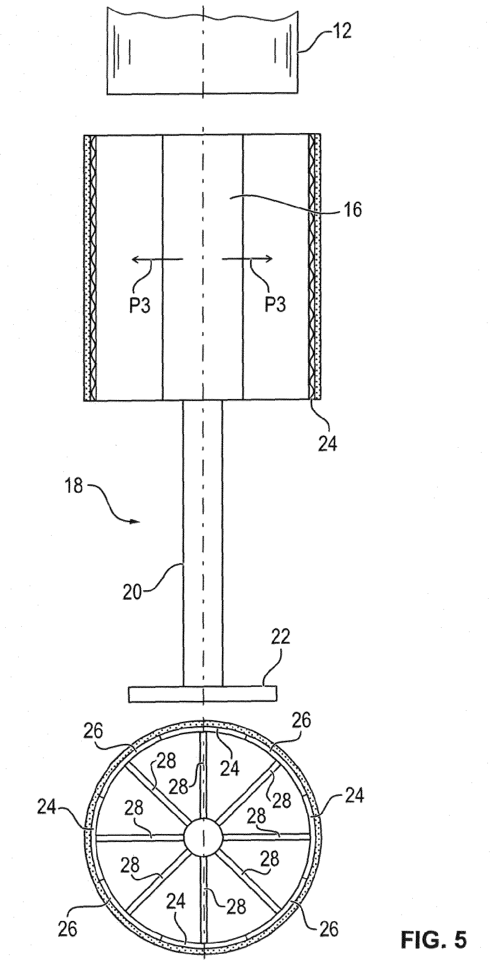

Figur 5 zeigt einen Zustand ähnlich Figur 2, mit in Richtung P3 ausgespreizten Spreizelementen 24, 26. Der Vorformling 14 liegt auf der wellenrohrförmigen Oberfläche der Spreizelemente 24, 26 auf, hat aber noch nicht das gewünschte Wellrohrprofil angenommen.

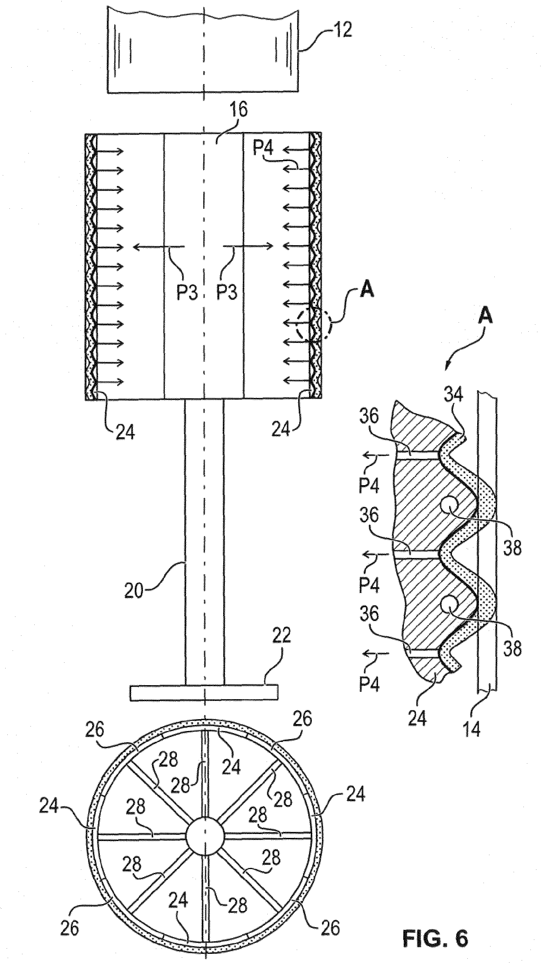

Figur 6 zeigt die Verformung des Vorformlings 14 zu einem Wellrohrprofil. Hierzu wird auf die Spreizelemente 24, 26 Vakuum, angedeutet durch Pfeile P4, aufgebracht, so dass der warme Vorformling 14 das Wellrohrprofil der Spreizelemente 24, 26 annimmt. Eine Vergrößerung eines Ausschnitts A zeigt, dass die Wanddicke des Rohrprofils des später fertigen Rohrkörpers 34 ausgehend vom glatten Profil des Vorformlings 14 unterschiedlich geformt wird. Durch die Streckung des Vorformlings 14 entsteht am äußeren Umfang eine größere Wanddicke als am inneren Durchmesser des Wellrohrprofils. Dies führt zu einem unterschiedlichen Abkühlungsverhalten innerhalb des Vorformlings 14. Weil beim Abkühlen der Schmelzen-Erstarrungspunkt am inneren Durchmesser früher erreicht wird als beim äußeren Durchmesser, entsteht durch das unterschiedliche Schrumpfungsverhalten ein Spannungsgefälle innerhalb der Profilwand. Diese innere Spannung führt zu einer Erhöhung der Ringsteifigkeit, was in der Praxis bedeutet, dass bei einem derartigen fertigen Rohrkörper 34 bei einer von außen aufgebrachten Belastung die dabei auftretende Verformung verringert wird. Dies ist ein weiterer technischer Vorteil dieses Herstellungsverfahrens.

Im Ausschnitt A sind Bohrungen 36 für das Anlegen von Vakuum zu erkennen. Weiterhin sind Bohrungen 38 für die Flüssigkeitskühlung vorhanden.

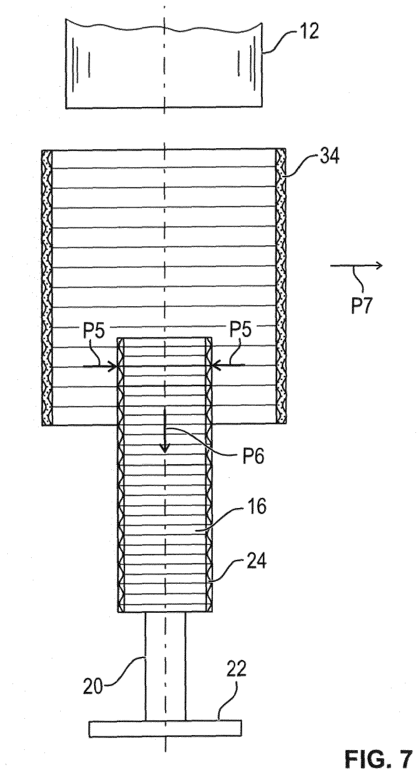

Figur 7 zeigt ähnlich wie Figur 3 das Zurückziehen der Spreizelemente 24, 26 in Richtung P5 und das Herabfahren des Spreizkerns 16 in Richtung P6. Der fertige wellenförmige, einwandige Rohrkörper 34 wird der Anlage 10 in Richtung P7 entnommen.

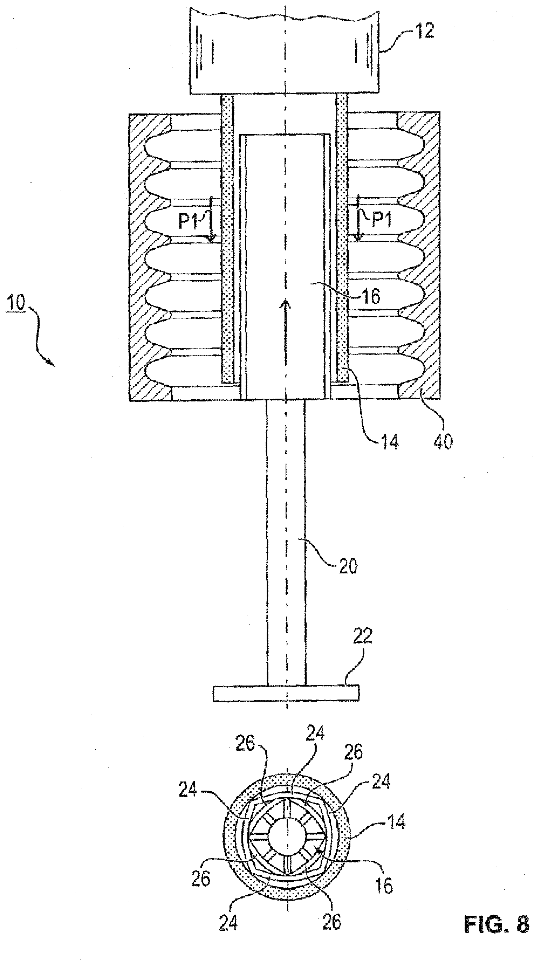

Die Figuren 8 bis 11 zeigen die Anlage 10 zur Herstellung eines einwandigen Wellrohkörpers, der mit Hilfe einer zweiteiligen Hohlform 40 geformt wird. Gemäß Figur 8 ist diese Hohlform 40 um den in der oberen Position befindlichen Spreizkern 16 in gleicher Höhe angeordnet. Ansonsten entspricht der Aufbau dem in Figur 1.

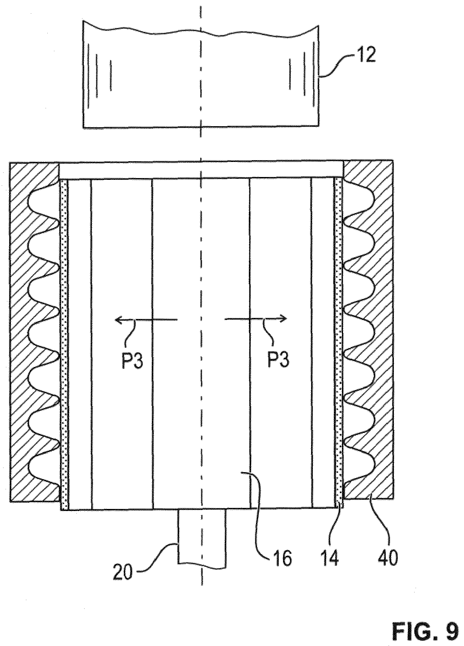

Gemäß Figur 9 erfolgt die Spreizung wie nach Figur 2, wobei der Vorformling 14 gegen ein Wellrohrprofil der Hohlform 40 gedrückt wird.

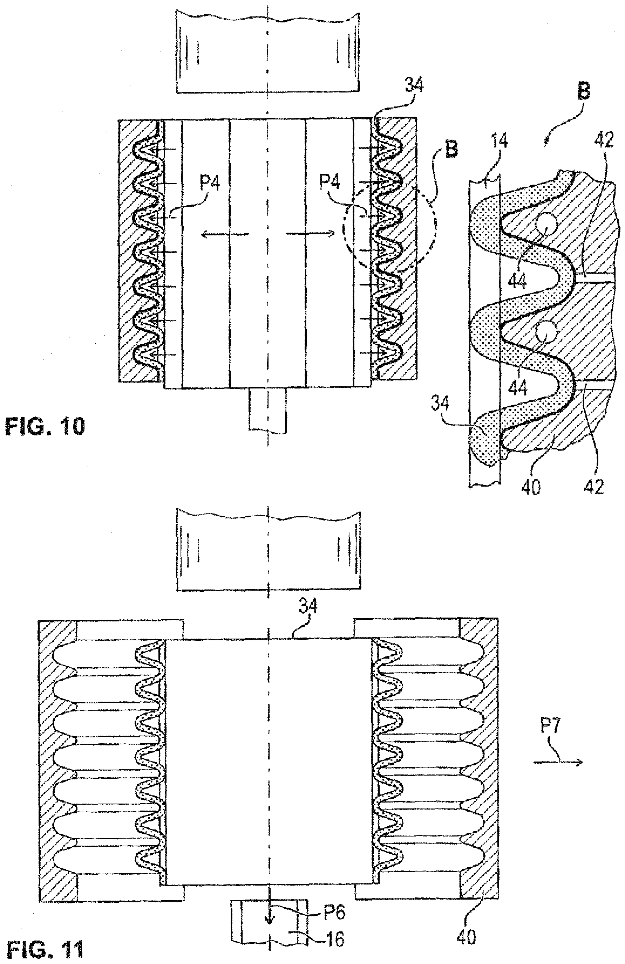

Figur 10 zeigt die Verformung des Vorformlings 14 zum Wellrohrkörper. Hierzu kann die Hohlform 40 mit Vakuum und/oder die Spreizelemente 24, 26 mit Druckluft beaufschlagt werden. Im vergrößerten Ausschnitt B ist zu erkennen, dass durch die Streckung des Vorformlings 14 die größere Wanddicke nunmehr am inneren Durchmesser gebildet wird. Die Hohlform 40 enthält Bohrungen 42 zum Anlegen des Vakuums und Bohrungen 44 zur Flüssigkeitskühlung.

Figur 11 zeigt den Zustand nach Abkühlung des Vorformlings 14, der dadurch zum Rohrkörper 34 wird. Die zweiteilige Hohlform 40 wird geöffnet und der einwandige, wellenförmige Rohrkörper 34 wird nach dem Absenken des Spreizkerns 16 seitlich entnommen.

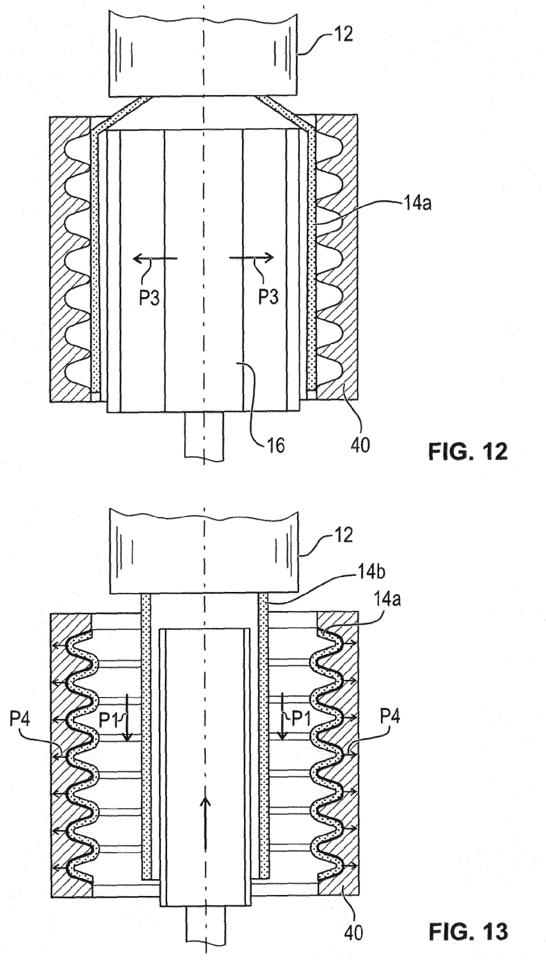

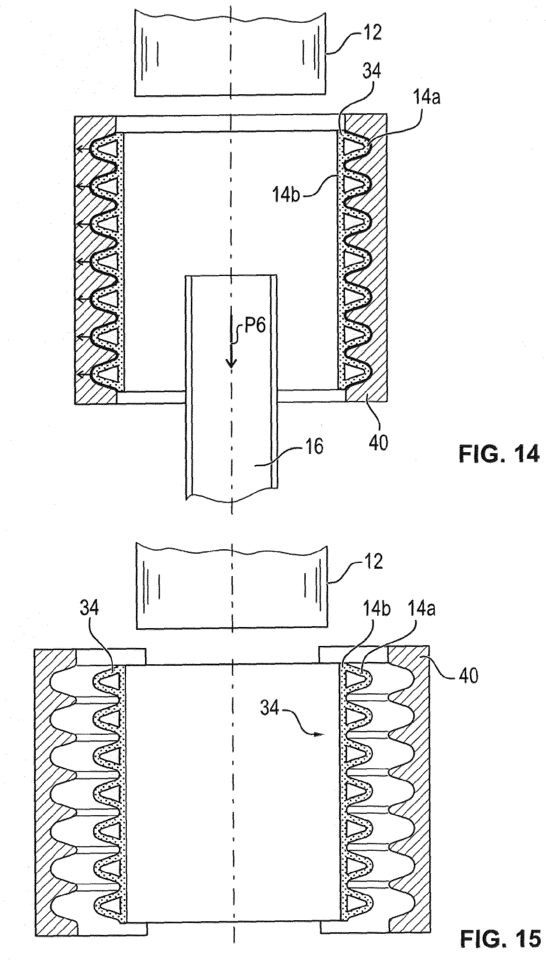

Die Figuren 12 bis 15 zeigen die Anlage 10 zur Herstellung eines doppelwandigen Wellrohrkörpers. Gemäß den Figuren 12 und 13 wird in einem ersten Prozessabschnitt ein einwandiger wellrohrförmiger Vorformling 14a hergestellt. Dies erfolgt ähnlich dem zuvor in Zusammenhang mit den Figuren 8 bis 11 beschriebenen Ablauf. Gemäß Figur 13 fährt der Spreizkern 16 nach Ausbildung der Wellrohrform für den ersten Vorformling 14a mit seinen Spreizelementen 24, 26 in seine eingefahrene Position und es wird vom Düsenkopf 12 ein weiterer Vorformling 14b in die geöffnete Hohlform 40 ausgebracht. Sodann wird gemäß Figur 14 der Spreizkern 16 soweit gespreizt, bis seine Spreizelemente 24, 26 den Vorformling 14b in Kontakt mit dem Wellenprofil des ersten Vorformlings 14a bringen. Dieser Vorformling 14a befindet sich in der Hohlform 40 im noch warmen Zustand. Durch ein Anlegen von Vakuum und/oder Druck von der Innenseite auf den weiteren Vorformling 14b verschweißen der erste Vorformling 14a und der weitere Vorformling 14b an Kontaktstellen. Danach erfolgt der Abkühlprozess für beide Vorformlinge 14a, 14b, wodurch der fertige Rohrkörper 34 entsteht. Anschließend wird der Spreizkern 16 nach unten gefahren. Dieser Zustand ist in Figur 14 gezeigt. Danach wird die Hohlform 40 geöffnet und der fertige zweiwandige wellenförmige Rohrkörper 34 entnommen (Figur 15).

An Stelle einer Hohlform 40 mit einem Wellenprofil kann auch eine Hohlform (nicht dargestellt) mit einem umfangsseitig nur abschnittweise ausgebildeten Wellenprofil oder einem Napfprofil verwendet werden. Bei diesem Napfprofil sind auf der Innenseite der Hohlform napfförmige Erhebungen ausgebildet. Der erste Vorformling nimmt durch Anlegen von Vakuum das napfförmige Profil an und verschweißt an Kontaktstellen mit dem zweiten Vorformling, wodurch ein zweiwandiger napfförmiger Rohrkörper entsteht.

Wie der Draufsicht in Figur 1 zu entnehmen ist, sind die Spreizelemente 24, 26 des Spreizkerns 16 ineinander verschachtelt, so dass der Spreizkern 16 im zusammengefahrenen Zustand geringe Querabmessungen hat, um seine Anordnung im Inneren des schlauchförmigen Vorformlings 14 zu ermöglichen. Beim Spreizvorgang werden durch die Antriebe 28 zunächst die außen angeordneten Spreizelemente 24 ausgefahren und danach die innen angeordneten Spreizelemente 26, so dass sie wie in Figur 2 unten dargestellt, im gedehnten Zustand des Vorformlings 14 seinen gesamten Innenmantel abdecken.

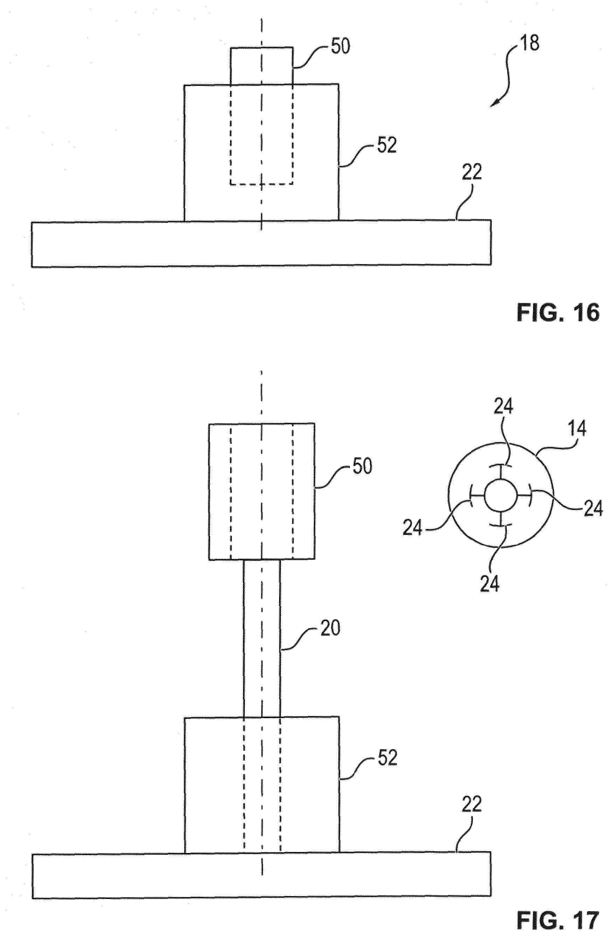

Nachfolgend wird eine Spreizvorrichtung 18 vorgestellt, die es ermöglicht, den Spreizvorgang mit kompakten Querabmessungen des Spreizkerns 16 zu realisieren. Demzufolge kann auch der Innendurchmesser des schlauchförmigen Vorformlings 14 verkleinert sein. Hierbei wird der Spreizvorgang aufgeteilt in eine Vorspreizung und in eine Gesamtspreizung. Entsprechend umfasst der Spreizkern 16 einen ersten Teilkern 50 mit ersten Spreizelementen 24 und einen zweiten Teilkern 52 mit zweiten Spreizelementen 26. Die Figuren 16 bis 19 zeigen dies schematisch.

Figur 16 zeigt die Spreizvorrichtung 18 mit Standplatte 22 und erstem Teilkern 50 und zweitem Teilkern 52 im abgesenkten Zustand, bei dem beide Teilkerne 50, 52 sich nahe der Standplatte 22 befinden.

Figur 17 zeigt, dass zunächst der erste Teilkern 50 entlang dem Führungselement 20 nach oben in die obere Position verfahren ist, in welchem der Teilkern 50 mit schmalen ersten Spreizelementen 24 im Innenraum des extrudierten Vorformlings 14 angeordnet ist (siehe schematische Draufsicht rechts).

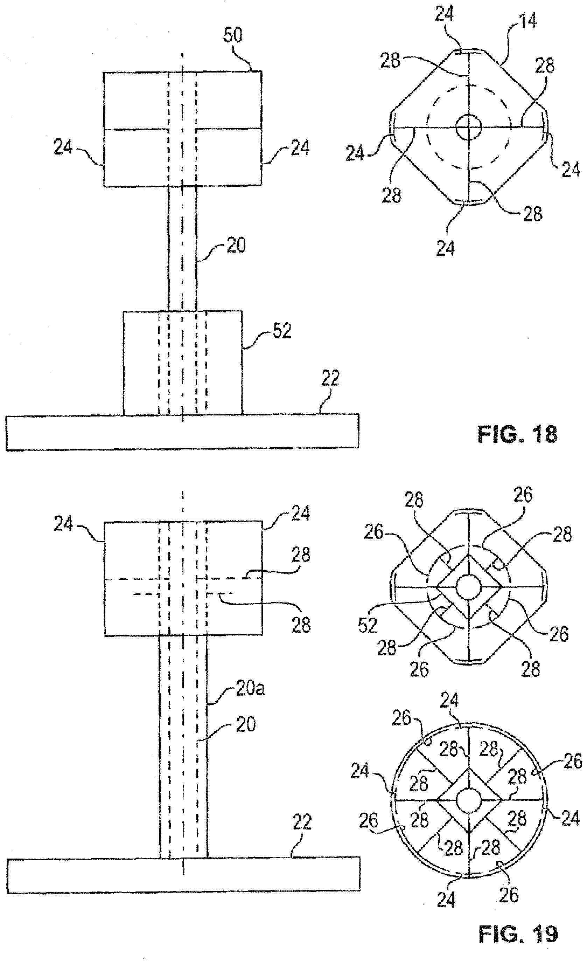

Figur 18 zeigt den Zustand mit ausgefahrenen ersten Spreizelementen 24. Dieses Ausfahren wird bewirkt durch Antriebe 28, beispielsweise durch Teleskop-Hydraulikantriebe. Wie zu erkennen ist, erfolgt dadurch eine Vorspreizung, in welchem der Innenraum des Vorformlings 14 vergrößert wird.

Gemäß Figur 19 wird in diesen vergrößerten Raum der zweite Teilkern 52 mit weiteren Führungsmitteln 20a entlang der Führung 20 mittels elektrischer oder hydraulischer Antriebe hineinbewegt. Der zweite Teilkern 52 umfasst zweite Spreizelemente 26, die ebenfalls durch Antriebe 28 bewegt werden. Die zweiten Spreizelemente 26 überdecken ein größeres Segment als die ersten Spreizelemente 24. Die ersten Spreizelemente 24 und die zweiten Spreizelemente 26 wirken so zusammen, dass sie als Ringsegmente den Innenmantel vollständig abdecken. Es ist vorteilhaft, die Antriebe 28 für die ersten Spreizelemente 24 und die Antriebe 28 für die zweiten Spreizelemente in unterschiedlichen Höhen anzuordnen. Die in den Figuren 16 bis 19 beschriebene Spreizvorrichtung kann auch für die Ausführungsbeispiele nach den Figuren 1 bis 15 verwendet werden.

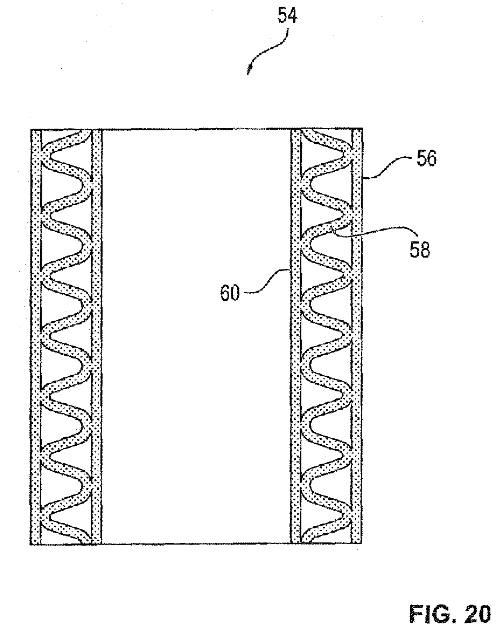

Nachfolgend wird die Herstellung eines dreiwandigen Rohrkörpers 54 beschrieben, bei dem nacheinander vom Düsenkopf 12 drei Vorformlinge ausgebracht werden. Figur 20 zeigt das fertige Produkt mit einer glatten Außenwand 56, einer glatten Innenwand 60 und einer dazwischen angeordneten wellenförmigen Mittelwand 58. Bei der Herstellung wird ein erster Vorformling hergestellt, wie in den Figuren 1 bis 4 beschrieben. Hierzu hat der verwendete erste Spreizkern glatte Spreizelemente und es wird die glatte Außenwand 56 ausgebildet. Danach wird ein zweiter Vorformling konzentrisch zum ersten Vorformling ausgebracht und mittels eines zweiten Spreizkerns gespreizt. Dessen Spreizelemente haben zumindest abschnittsweise ein Wellenprofil oder ein Napfprofil und spreizen den zweiten Vorformling so weit, dass er mit dem noch warmen ersten Vorformling an Kontaktstellen verschweißt. Danach wird der dritte Vorformling konzentrisch zum zweiten Vorformling ausgebracht, der mittels eines dritten Spreizkerns mit glatten Spreizelementen so weit gespreizt wird, dass er mit dem noch warmen zweiten Vorformling an Kontaktstellen verschweißt. Der dritte Vorformling bildet beim fertigen dreiwandigen Rohrkörper 54 die glatte Innenwand 60.

Wie erwähnt, werden bei der Herstellung des dreiwandigen Rohrkörpers 54 unterschiedliche Spreizkerne verwendet. Die verschiedenen Spreizkerne können auf einer gemeinsamen Standplatte angeordnet sein und jeweils in die notwendige Position unter dem Düsenkopf durch Linearbewegung auf der Standplatte oder durch Verschwenken bewegt werden.

Prinzipiell können auch Rohrkörper hergestellt werden, die mehr als drei Wandungen haben. Jede Wandung kann dabei durch Koextrusion auch mehrere Schichten umfassen.

Mit Hilfe des beschriebenen Herstellverfahrens und der Anlage können einwandige oder mehrwandige Rohrkörper aus thermoplastischem Kunststoff hergestellt werden, deren Ausdehnung in Querrichtung 1600 bis 2400 mm betragen können. Es können Längen L von 1,5 m bis 6 m erreicht werden. Damit können Rohrkörper mit Volumina von 8 m³ bis 32 m³ (bitte noch ergänzen) gefertigt werden. Die Querschnittform ist nicht auf eine Kreisform beschränkt, sondern es können durch eine konstruktive Auslegung der Spreizelemente und der zugehörigen Antriebe quadratische, rechteckförmige, ellipsenförmige Querschnitte erzielt werden.

### Bezugszeichenliste

- 10: Anlage
- 12: Düsenkopf
- 14, 14a, 14b: Vorformling
- 16: Spreizkern
- 18: Spreizvorrichtung
- 20: Führungselement
- 22: Standplatte
- 24: erste Spreizelemente
- 26: zweite Spreizelemente
- 28: Antrieb
- 30: Trennvorrichtung
- 32: Gebläse
- P1 bis P7: Richtungspfeile
- 34: fertiger Rohrkörper
- 35: Wellenförmiger doppelwandiger Rohrkörper
- 36: Bohrung für Vakuum
- 38: Bohrung für Flüssigkeitskühlung
- 40: zweiteilige Hohlform
- 42: Bohrungen zum Anlegen des Vakuums
- 44: Bohrungen zur Flüssigkeitskühlung
- 50: erster Teilkern
- 52: zweiter Teilkern
- 54: dreiwandiger Rohrkörper
- 56: Außenwand
- 58: Mittelwand
- 60: Innenwand

## Patentansprüche

1. Verfahren zum Herstellen eines mindestens einwandigen Rohrkörpers (34) aus thermoplastischem Kunststoff in einer Anlage (10),
bei dem aus dem Düsenkopf (12) einer Extrusionsvorrichtung mindestens ein schlauchförmiger Vorformling (14) ausgebracht wird,
der Vorformling (14) vertikal nach unten geführt wird,
der Vorformling (14) in einem Spreizvorgang durch einen zentrisch zum Düsenkopf (12) angeordneten Spreizkern (16) auf eine vorbestimmte Ausdehnung in Querrichtung und eine vorbestimmte Form gespreizt wird, wobei der Vorformling (14) oben und unten offen bleibt,
bei dem zum Herstellen des mindestens einwandigen Rohrkörpers, der mit einem Wellenprofil oder Napfprofil versehen ist, der Spreizkern (16) mit Wellenprofil oder Napfenprofil versehene Spreizelemente (24, 26) aufweist, wobei durch Beaufschlagung der Spreizelemente mit Vakuum der warme Vorformling (14) das Wellenprofil oder das Napfprofil der Spreizelemente (24, 26) annimmt,
und/oder bei dem zur Herstellung des mindestens einwandigen Rohrkörpers (34) eine mindestens zweiteilige Hohlform (40) verwendet wird, die um den schlauchförmigen Vorformling (14) angeordnet wird, wobei die Hohlform (40) ein Wellenprofil oder ein Napfprofil aufweist, wobei beim Spreizen durch die Spreizvorrichtung (18) der Vorformling gegen das Wellenprofil oder das Napfprofil der Hohlform (40) gedrückt und durch ein Beaufschlagen der Hohlform (40) mit Vakuum und/oder des Spreizkerns (16) mit Druckluft der Vorformling (14) die Form des Wellenprofils oder Napfprofils annimmt,
nach dem Abkühlen des mindestens einen Vorformlings (14, 14a, 14b) der Spreizkern (16) in einen nicht gespreizten Zustand verfahren wird,
und bei dem danach der mindestens einwandige Rohrkörper (34) der Anlage (10) entnommen wird.

2. Verfahren nach Anspruch 1, bei dem zur Herstellung eines doppelwandigen, wellenförmigen oder napfförmigen Rohrkörpers (35) der Spreizkern (16) nach dem Ausformen des Vorformlings (14a) mittels der Hohlform (40), die mit einem Wellenprofil oder Napfprofil versehen ist, in einen eingefahrenen Zustand bewegt wird,
danach aus dem Düsenkopf (12) ein weiterer schlauchförmiger Vorformling (14b) ausgebracht wird, der dem noch nicht abgekühlten Vorformling (14a) in der Hohlform (40) gegenübersteht,
der Spreizkern (16) den weiteren Vorformling (14b) spreizt und ihn mit dem in der Hohlform (40) befindlichen Vorformling (14a) in Kontakt bringt, so dass der weitere Vorformling (14b) mit dem in der Hohlform (40) befindlichen Vorformling (14a) an Kontaktstellen verschweißt,
und bei dem der Vorformling (14a) in der Hohlform (40) und auch der weitere Vorformling (14b) gemeinsam abgekühlt werden.

3. Verfahren nach einem der vorhergehenden Ansprüche, bei dem der Spreizkern (16) nach dem Abkühlen des einen Vorformlings (14) oder mehrerer Vorformlinge (14a, 14b) vertikal nach unten verfahren und danach der abgekühlte Rohrkörper (34) der Anlage (10) entnommen wird.

4. Verfahren nach einem der vorhergehenden Ansprüche 1 bis 3, bei dem nach dem Abkühlen des einen Vorformlings (14) oder mehrerer Vorformlinge (14a, 14b) eine seitliche Relativbewegung des Spreizkerns (16) zum Düsenkopf erfolgt,
und der abgekühlte Rohrkörper (34) nach oben der Anlage (10) entnommen wird.

5. Verfahren nach einem der vorhergehenden Ansprüche, bei dem zum Abkühlen des mindestens einen Vorformlings (14) oder der mehreren Vorformlingen (14a, 14b) die Formelemente (24, 26) des Spreizkerns (16) durch eine Kühlvorrichtung und/oder durch ein Gebläse (32) von außen gekühlt werden und/oder zur Beschleunigung des Abkühlprozesses die Formelemente (24, 26) mit Vakuum beaufschlagt werden.

6. Verfahren nach einem der vorhergehenden Ansprüche, wobei der Spreizkern (16) einen ersten Teilkern (50) und einen zweiten Teilkern (52) umfasst, mit deren Hilfe beim Spreizvorgang zunächst eine Vorspreizung mittels des ersten Teilkerns (50) erfolgt, bei der erste Spreizelemente (24) den Innenraum im Vorformling (14) so weit vergrößern, dass Platz im Innenraum für den zweien Teilkern (52) geschaffen wird, deren zweite Spreizelemente (26) den Vorformling (14) bis zur vorbestimmten Ausdehnung und Form in Querrichtung spreizen.

7. Anlage (10) zum Herstellen eines mindestens einwandigen Rohrkörpers (34) aus thermoplastischem Kunststoff,
bei der die Anlage eingerichtet ist, um aus dem Düsenkopf (12) einer Extrusionsvorrichtung mindestens einen schlauchförmigen Vorformling (14) auszubringen, und den Vorformling (14) vertikal nach unten zu führen,
bei der ein zentrisch zum Düsenkopf (12) angeordneter Spreizkern (16) den Vorformling (14) in einem Spreizvorgang auf eine vorbestimmte Ausdehnung in Querrichtung und eine vorbestimmte Form spreizt, wobei der Vorformling (14) oben und unten offen bleibt,
bei der zum Herstellen des mindestens einwandigen Rohrkörpers, der mit einem Wellenprofil oder Napfprofil versehen ist, der Spreizkern (16) mit Wellenprofil oder Napfenprofil versehene Spreizelemente (24, 26) aufweist, wobei durch Beaufschlagung der Spreizelemente mit Vakuum der warme Vorformling (14) das Wellenprofil oder das Napfprofil der Spreizelemente (24, 26) annimmt,
und/oder bei der zur Herstellung des mindestens einwandigen Rohrkörpers (34) eine mindestens zweiteilige Hohlform (40) verwendet wird, die um den schlauchförmigen Vorformling (14) angeordnet wird, wobei die Hohlform (40) ein Wellenprofil oder ein Napfprofil aufweist, bei der beim Spreizen durch die Spreizvorrichtung (18) der Vorformling gegen das Wellenprofil oder das Napfprofil der Hohlform (40) drückt und durch ein Beaufschlagen der Hohlform (40) mit Vakuum und/oder des Spreizkerns (16) mit Druckluft der Vorformling (14) die Form des Wellenprofils oder Napfprofils annimmt,
und bei der der Spreizkern (16) nach dem Abkühlen des mindestens einen Vorformlings (14, 14a, 14b) in einen nicht gespreizten Zustand fährt.

8. Anlage nach Anspruch 7, bei der zur Herstellung eines doppelwandigen, wellenförmigen oder napfförmigen Rohrkörpers (34) die Anlage eingerichtet ist,
um den Spreizkern (16) nach dem Ausformen des Vorformlings (14a) mittels der Hohlform (40) mit einem Wellenprofil oder Napfprofil in einen eingefahrenen Zustand zu bewegen, und
danach aus dem Düsenkopf (12) einen weiteren schlauchförmigen Vorformling (14b) auszubringen, der dem noch nicht abgekühlten Vorformling (14a) in der Hohlform (40) mit Wellenprofil oder Napfprofil gegenübersteht,
wobei der Spreizkern (16) den weiteren Vorformling (14b) spreizt und ihn mit dem in der Hohlform (40) befindlichen Vorformling (14a) in Kontakt bringt, so dass der weitere Vorformling (14b) mit dem in der Hohlform (40) befindlichen Vorformling (14a) an Kontaktstellen verschweißt,
und bei dem die Anlage eingerichtet ist, um den Vorfomling in der Hohlform (14a) und auch den weiteren Vorformling (14b) gemeinsam abzukühlen.

9. Anlage nach einem der vorhergehenden Ansprüche, wobei die Anlage eingerichtet ist, um nach dem Abkühlen des einen Vorformlings (14) oder mehrerer Vorformlinge (14a, 14b) eine seitliche Relativbewegung des Spreizkerns (16) zum Düsenkopf zu bewirken.

10. Anlage nach einem der vorhergehenden Ansprüche, bei der zum Abkühlen des mindestens einen Vorformlings (14) oder der mehreren Vorformlingen (14a, 14b) die Anlage eingerichtet ist, um die Formelemente (24, 26) des Spreizkerns (16) durch eine Kühlvorrichtung und/oder durch ein Gebläse (32) von außen zu kühlen und/oder zur Beschleunigung des Abkühlprozesses die Formelemente (24, 26) mit Vakuum zu beaufschlagen.

11. Anlage nach einem der vorhergehenden Ansprüche, wobei der Spreizkern (16) einen ersten Teilkern (50) und einen zweiten Teilkern (52) umfasst, mit deren Hilfe beim Spreizvorgang zunächst eine Vorspreizung mittels des ersten Teilkerns (50) erfolgt, bei der erste Spreizelemente (24) den Innenraum im Vorformling (14) so weit vergrößern, dass Platz im Innenraum für den zweiten Teilkern (52) geschaffen wird, deren zweite Spreizelemente (26) den Vorformling (14) bis zur vorbestimmten Ausdehnung und Form in Querrichtung spreizen.

## Claims

1. Method for producing an at least single-walled tube body (34) from thermoplastic material in an installation (10),
in which at least one tubular preform (14) is discharged from the nozzle head (12) of an extrusion device,
the preform (14) is guided vertically downwards,
the preform (14) is expanded to a predetermined extent in the transverse direction and to a predetermined shape in an expansion operation by an expanding core (16) arranged centrally in relation to the nozzle head (12), wherein the preform (14) remains open at the top and bottom,
in which, to produce the at least single-walled tube body, which is provided with a corrugated profile or cup-shaped profile, the expanding core (16) has expanding elements (24, 26) provided with a corrugated profile or cup-shaped profile, wherein, by applying a vacuum to the expanding elements, the hot preform (14) takes on the corrugated profile or the cup-shaped profile of the expanding elements (24, 26),
and/or in which, to produce the at least single-walled tube body (34), an at least two-part hollow mould (40) arranged around the tubular preform (14) is used, wherein the hollow mould (40) has a corrugated profile or a cup-shaped profile, wherein, during the expansion by the expanding device (18), the preform is pressed against the corrugated profile or the cup-shaped profile of the hollow mould (40) and, as a result of applying a vacuum to the hollow mould (40) and/or compressed air to the expanding core (16), the preform (14) takes on the shape of the corrugated profile or cup-shaped profile,
after the cooling of the at least one preform (14, 14a, 14b), the expanding core (16) is moved into a non-expanded state,
and in which, after this, the at least single-walled tube body (34) is removed from the installation (10).

2. Method according to Claim 1, in which, to produce a double-walled, corrugated or cup-shaped tube body (35), after the preform (14a) has been shaped by means of the hollow mould (40), which is provided with a corrugated profile or cup-shaped profile, the expanding core (16) is moved into a retracted state,
then, a further tubular preform (14b), which is opposite the not yet cooled preform (14a) in the hollow mould (40), is discharged from the nozzle head (12),
the expanding core (16) expands the further preform (14b) and brings it into contact with the preform (14a) located in the hollow mould (40), with the result that the further preform (14b) is welded to the preform (14a) located in the hollow mould (40) at contact points,
and in which the preform (14a) in the hollow mould (40) and also the further preform (14b) are cooled together.

3. Method according to either of the preceding claims, in which, after the one preform (14) or plurality of preforms (14a, 14b) have been cooled, the expanding core (16) is moved vertically downwards and then the cooled tube body (34) is removed from the installation (10).

4. Method according to one of the preceding Claims 1 to 3, in which, after the one preform (14) or plurality of preforms (14a, 14b) have been cooled, a lateral relative movement of the expanding core (16) in relation to the nozzle head is performed,
and the cooled tube body (34) is removed from the installation (10) upwards.

5. Method according to one of the preceding claims, in which, to cool the at least one preform (14) or the plurality of preforms (14a, 14b), the mould elements (24, 26) of the expanding core (16) are cooled from the outside by a cooling device and/or by a fan (32), and/or, to accelerate the cooling process, a vacuum is applied to the mould elements (24, 26).

6. Method according to one of the preceding claims, wherein the expanding core (16) comprises a first partial core (50) and a second partial core (52), with the aid of which, during the expansion operation, at least one pre-expansion is performed by means of the first partial core (50), in which first expanding elements (24) enlarge the interior space in the preform (14) to such an extent that space is provided in the interior space for the second partial core (52), the second expanding elements (26) of which expand the preform (14) to the predetermined extent and shape in the transverse direction.

7. Installation (10) for producing an at least single-walled tube body (34) from thermoplastic material,
in which the installation is configured to discharge at least one tubular preform (14) from the nozzle head (12) of an extrusion device, and to guide the preform (14) vertically downwards,
in which an expanding core (16) arranged centrally in relation to the nozzle head (12) expands the preform (14) in an expansion operation to a predetermined extent in the transverse direction and to a predetermined shape, wherein the preform (14) remains open at the top and bottom,
in which, to produce the at least single-walled tube body, which is provided with a corrugated profile or cup-shaped profile, the expanding core (16) has expanding elements (24, 26) provided with a corrugated profile or cup-shaped profile, wherein, as a result of applying a vacuum to the expanding elements, the hot preform (14) takes on the corrugated profile or the cup-shaped profile of the expanding elements (24, 26),
and/or in which, to produce the at least single-walled tube body (34), an at least two-part hollow mould (40) is used, which is arranged around the tubular preform (14), wherein the hollow mould (40) has a corrugated profile or a cup-shaped profile, in which, during the expansion by the expanding device (18), the preform is pressed against the corrugated profile or the cup-shaped profile of the hollow mould (40) and, as a result of applying a vacuum to the hollow mould (40) and/or compressed air to the expanding core (16), the preform (14) takes on the shape of the corrugated profile or cup-shaped profile,
and in which, after the at least one preform (14, 14a, 14b) has been cooled, the expanding core (16) is moved into a non-expanded state.

8. Installation according to Claim 7, in which, to produce a double-walled, corrugated or cup-shaped tube body (34), the installation is configured,
after the preform (14a) has been shaped by means of the hollow mould (40) with a corrugated profile or cup-shaped profile, to move the expanding core (16) into a retracted state, and
then to discharge a further tubular preform (14b), which is opposite the not yet cooled preform (14a) in the hollow mould (40) with a corrugated profile or cup-shaped profile, from the nozzle head (12),
wherein the expanding core (16) expands the further preform (14b) and brings it into contact with the preform (14a) located in the hollow mould (40), with the result that the further preform (14b) is welded to the preform (14a) located in the hollow mould (40) at contact points, and in which the installation is configured to cool the preform in the hollow mould (14a) and also the further preform (14b) together.

9. Installation according to one of the preceding claims, wherein the installation is configured, after the one preform (14) or plurality of preforms (14a, 14b) have been cooled, to effect a lateral relative movement of the expanding core (16) in relation to the nozzle head.

10. Installation according to one of the preceding claims, in which, to cool the at least one preform (14) or the plurality of preforms (14a, 14b), the installation is configured to cool the mould elements (24, 26) of the expanding core (16) from the outside by way of a cooling device and/or by way of a fan (32) and/or, to accelerate the cooling process, to apply a vacuum to the mould elements (24, 26).

11. Installation according to one of the preceding claims, wherein the expanding core (16) comprises a first partial core (50) and a second partial core (52), with the aid of which, during the expansion operation, at least one pre-expansion by means of the first partial core (50) is performed, in which first expanding elements (24) enlarge the interior space in the preform (14) to such an extent that space is provided in the interior space for the second partial core (52), the second expanding elements (26) of which expand the preform (14) to the predetermined extent and shape in the transverse direction.

## Revendications

1. Procédé de fabrication d'un corps tubulaire (34) au moins à une paroi à partir de matière plastique thermoplastique dans une installation (10),
au moins une préforme (14) en forme de tuyau étant déchargée de la tête de buse (12) d'un dispositif d'extrusion,
la préforme (14) étant guidée verticalement vers le bas,
la préforme (14) étant élargie dans une opération d'élargissement par un noyau d'élargissement (16) agencé au centre par rapport à la tête de buse (12) jusqu'à une extension prédéterminée dans la direction transversale et une forme prédéterminée, la préforme (14) restant ouverte en haut et en bas,
pour la fabrication du corps tubulaire au moins à une paroi qui est pourvu d'un profil ondulé ou d'un profil à godets, le noyau d'élargissement (16) présentant des éléments d'élargissement (24, 26) pourvus d'un profil ondulé ou d'un profil à godets, la préforme chaude (14) adoptant le profil ondulé ou le profil à godets des éléments d'élargissement (24, 26) par soumission des éléments d'élargissement à un vide,
et/ou, pour la fabrication du corps tubulaire (34) au moins à une paroi, un moule creux (40) en au moins deux parties étant utilisé, qui est agencé autour de la préforme (14) en forme de tuyau, le moule creux (40) présentant un profil ondulé ou un profil à godets, lors de l'élargissement par le dispositif d'élargissement (18), la préforme étant pressée contre le profil ondulé ou le profil à godets du moule creux (40) et, par une soumission du moule creux (40) à un vide et/ou du noyau d'élargissement (16) à de l'air comprimé, la préforme (14) adoptant la forme du profil ondulé ou du profil à godets,
après le refroidissement de l'au moins une préforme (14, 14a, 14b), le noyau d'élargissement (16) étant conduit dans un état non élargi,
et le corps tubulaire (34) au moins à une paroi étant ensuite extrait de l'installation (10).

2. Procédé selon la revendication 1, pour la fabrication d'un corps tubulaire (35) à double paroi, de forme ondulée ou en forme de godets, le noyau d'élargissement (16) étant déplacé dans un état rétracté après la mise en forme de la préforme (14a) au moyen du moule creux (40) qui est pourvu d'un profil ondulé ou d'un profil à godets,
une préforme supplémentaire (14b) en forme de tuyau étant ensuite déchargée de la tête de buse (12), laquelle est placée en face de la préforme (14a) encore non refroidie dans le moule creux (40),
le noyau d'élargissement (16) élargissant la préforme supplémentaire (14b) et la mettant en contact avec la préforme (14a) se trouvant dans le moule creux (40), de telle sorte que la préforme supplémentaire (14b) se soude à la préforme (14a) se trouvant dans le moule creux (40) au niveau de points de contact,
et la préforme (14a) dans le moule creux (40) et également la préforme supplémentaire (14b) étant refroidies ensemble.

3. Procédé selon l'une quelconque des revendications précédentes, le noyau d'élargissement (16) étant conduit verticalement vers le bas après le refroidissement de la préforme (14) ou des préformes (14a, 14b) et le corps tubulaire refroidi (34) étant ensuite extrait de l'installation (10).

4. Procédé selon l'une quelconque des revendications 1 à 3 précédentes, un mouvement relatif latéral du noyau d'élargissement (16) par rapport à la tête de buse ayant lieu après le refroidissement de la préforme (14) ou des préformes (14a, 14b),
et le corps tubulaire refroidi (34) étant extrait de l'installation (10) vers le haut.

5. Procédé selon l'une quelconque des revendications précédentes, pour le refroidissement de l'au moins une préforme (14) ou des préformes (14a, 14b), les éléments de moulage (24, 26) du noyau d'élargissement (16) étant refroidis depuis l'extérieur par un dispositif de refroidissement et/ou par un ventilateur (32) et/ou les éléments de moulage (24, 26) étant soumis à un vide pour accélérer le processus de refroidissement.

6. Procédé selon l'une quelconque des revendications précédentes, le noyau d'élargissement (16) comprenant un premier noyau partiel (50) et un deuxième noyau partiel (52), à l'aide desquels, lors de l'opération d'élargissement, un pré-élargissement est d'abord effectué au moyen du premier noyau partiel (50), lors duquel des premiers éléments d'élargissement (24) agrandissent l'espace intérieur dans la préforme (14) jusqu'à créer de la place dans l'espace intérieur pour le deuxième noyau partiel (52), dont les deuxièmes éléments d'élargissement (26) élargissent la préforme (14) dans la direction transversale jusqu'à l'extension et la forme prédéterminées.

7. Installation (10) pour la fabrication d'un corps tubulaire (34) au moins à une paroi à partir de matière plastique thermoplastique,
l'installation étant adaptée pour décharger au moins une préforme (14) en forme de tuyau de la tête de buse (12) d'un dispositif d'extrusion, et pour guider la préforme (14) verticalement vers le bas,
un noyau d'élargissement (16) agencé au centre par rapport à la tête de buse (12) élargissant la préforme (14) dans une opération d'élargissement jusqu'à une extension prédéterminée dans la direction transversale et une forme prédéterminée, la préforme (14) restant ouverte en haut et en bas,
pour la fabrication du corps tubulaire au moins à une paroi qui est pourvu d'un profil ondulé ou d'un profil à godets, le noyau d'élargissement (16) présentant des éléments d'élargissement (24, 26) pourvus d'un profil ondulé ou d'un profil à godets, la préforme chaude (14) adoptant le profil ondulé ou le profil à godets des éléments d'élargissement (24, 26) par soumission des éléments d'élargissement à un vide,
et/ou, pour la fabrication du corps tubulaire (34) au moins à une paroi, un moule creux (40) en au moins deux parties étant utilisé, qui est agencé autour de la préforme (14) en forme de tuyau, le moule creux (40) présentant un profil ondulé ou un profil à godets, lors de l'élargissement par le dispositif d'élargissement (18), la préforme étant pressée contre le profil ondulé ou le profil à godets du moule creux (40) et, par une soumission du moule creux (40) à un vide et/ou du noyau d'élargissement (16) à de l'air comprimé, la préforme (14) adoptant la forme du profil ondulé ou du profil à godets,
et, après le refroidissement de l'au moins une préforme (14, 14a, 14b), le noyau d'élargissement (16) étant conduit dans un état non élargi.

8. Installation selon la revendication 7, pour la fabrication d'un corps tubulaire (34) à double paroi, de forme ondulée ou en forme de godets, l'installation étant adaptée pour déplacer le noyau d'élargissement (16) dans un état rétracté après la mise en forme de la préforme (14a) au moyen du moule creux (40) pourvu d'un profil ondulé ou d'un profil à godets, et
pour décharger ensuite une préforme supplémentaire (14b) en forme de tuyau de la tête de buse (12), laquelle est placée en face de la préforme (14a) encore non refroidie dans le moule creux (40) pourvu d'un profil ondulé ou d'un profil à godets,
le noyau d'élargissement (16) élargissant la préforme supplémentaire (14b) et la mettant en contact avec la préforme (14a) se trouvant dans le moule creux (40), de telle sorte que la préforme supplémentaire (14b) se soude à la préforme (14a) se trouvant dans le moule creux (40) au niveau de points de contact,
et l'installation étant adaptée pour refroidir ensemble la préforme dans le moule creux (14a) et également la préforme supplémentaire (14b).

9. Installation selon l'une quelconque des revendications précédentes, l'installation étant adaptée pour effectuer, après le refroidissement de la préforme (14) ou des préformes (14a, 14b), un mouvement relatif latéral du noyau d'élargissement (16) par rapport à la tête de buse.

10. Installation selon l'une quelconque des revendications précédentes, pour le refroidissement de l'au moins une préforme (14) ou des préformes (14a, 14b), l'installation étant adaptée pour refroidir depuis l'extérieur les éléments de moulage (24, 26) du noyau d'élargissement (16) par un dispositif de refroidissement et/ou par un ventilateur (32) et/ou pour soumettre les éléments de moulage (24, 26) à un vide pour accélérer le processus de refroidissement.

11. Installation selon l'une quelconque des revendications précédentes, le noyau d'élargissement (16) comprenant un premier noyau partiel (50) et un deuxième noyau partiel (52), à l'aide desquels, lors de l'opération d'élargissement, un pré-élargissement est d'abord effectué au moyen du premier noyau partiel (50), lors duquel des premiers éléments d'élargissement (24) agrandissent l'espace intérieur dans la préforme (14) jusqu'à créer de la place dans l'espace intérieur pour le deuxième noyau partiel (52), dont les deuxièmes éléments d'élargissement (26) élargissent la préforme (14) dans la direction transversale jusqu'à l'extension et la forme prédéterminées.
